Europäisches Patentamt

(19) European Patent Office

Office européen des brevets

(11) Publication number: **0 005 932**
**B1**

(12) **EUROPEAN PATENT SPECIFICATION**

(45) Date of publication of patent specification: **04.05.83**

(21) Application number: **79300836.8**

(22) Date of filing: **15.05.79**

(51) Int. Cl.³: **G 01 N 29/04,**
**H 04 R 17/00**

(54) A detector for and a method of ultrasonic detection of faults in conveyor belts.

(30) Priority: **31.05.78 GB 2506578**

(43) Date of publication of application:
**12.12.79 Bulletin 79/25**

(45) Publication of the grant of the patent:
**04.05.83 Bulletin 83/18**

(84) Designated Contracting States:
**AT BE CH DE FR IT LU NL SE**

(56) References cited:
**GB - A - 828 840**
**GB - A - 1 118 141**
**US - A - 2 912 854**
**US - A - 3 672 210**
**US - A - 3 986 389**

(73) Proprietor: **BALTEAU SONATEST LIMITED**
**Dickens Road Old Wolverton Road Industrial**
**Estate**
**Milton Keynes, Buckinghamshire, MK12 5QQ (GB)**

(72) Inventor: **Edmonson, Harold Marshall**
**56 Lodge Bank Brinscall**
**Chorley Lancashire (GB)**
Inventor: **Dickson, John Kidd**
**"Alderney" Quainton Road**
**Waddesdon Buckinghamshire (GB)**

(74) Representative: **Horton, Andrew Robert Grant et al,**
**BOULT, WADE & TENNANT 27 Furnival Street**
**London, EC4A 1PQ (GB)**

A detector for and a method of ultrasonic detection
of faults in conveyor belts

## Introduction

This invention relates to the detection of longitudinal faults, such as rents or slits, in a conveyor belt while it is in motion.

The invention is particularly, although not exclusively, intended for use in the detection of longitudinal slits in a conveyor belt which comprises a polymeric material reinforced by textile material or steel cords that extend longitudinally of the belt. Such belts are often used for the conveyance of heavy loads which may contain foreign matter that is liable to rend or cut the belt. A small rent or slit can usually be repaired and so the invention may be used to provide either a warning of the incidence of a longitudinal fault or the automatic cessation of the movement of the belt in order to facilitate the limitation of damage to it.

## Indication of the Prior Art

British Patent Specification No. 828840 discloses a device for testing sheets by means of ultrasonics, particularly in rolling mills, and for this purpose discloses rollers of piezoelectric ceramic material, for instance barium titanate, disposed as transmitter on the one and as a sound receiver on the other side of the sheet to be tested as to be in contact with and to roll on the travelling sheet.

United States Patent Specification No. 2912854 discloses an ultrasonic surface testing device in which a receiving crystal of the Y-cut surface wave type is placed on the upper surface of a part under inspection and at a given distance from a transmitter crystal. There is connected to the receiving crystal some means for measuring the "amount of radiation received". The two crystals, maintained at a given spacing, are moved about the surface of the part. If a normal amount of radiation is not received through some area of transmission of the surface waves, then the operator will know that there is a flaw in this area.

## Summary of the Invention

The invention provides a detector which is disposed to detect a longitudinal fault in a conveyor belt while the belt is in motion by means of the effect of the fault on the transmission of an ultrasonic mechanical wave across the belt, the detector comprising at least one pair of transducers which make rolling contact with the same side of the belt and constitute a transmitter and receiver respectively of the said wave; it also provides a corresponding method of detecting a fault in a conveyor belt while the belt is in motion.

## Detailed Description

An exemplary embodiment of the invention is described in the following, during which reference is made to the accompanying drawings, in which:—

Figure 1 is a schematic sectional view of a conveyor belt and an array of transducers;

Figure 2 is a partial plan view of the belt and the transducers;

Figure 3 is a schematic diagram of an electrical circuit for use with the transducers;

Figure 4 is an end elevation of a transducer in the form of a roller; and

Figure 5 is a side elevation of the transducer illustrated in Figure 4.

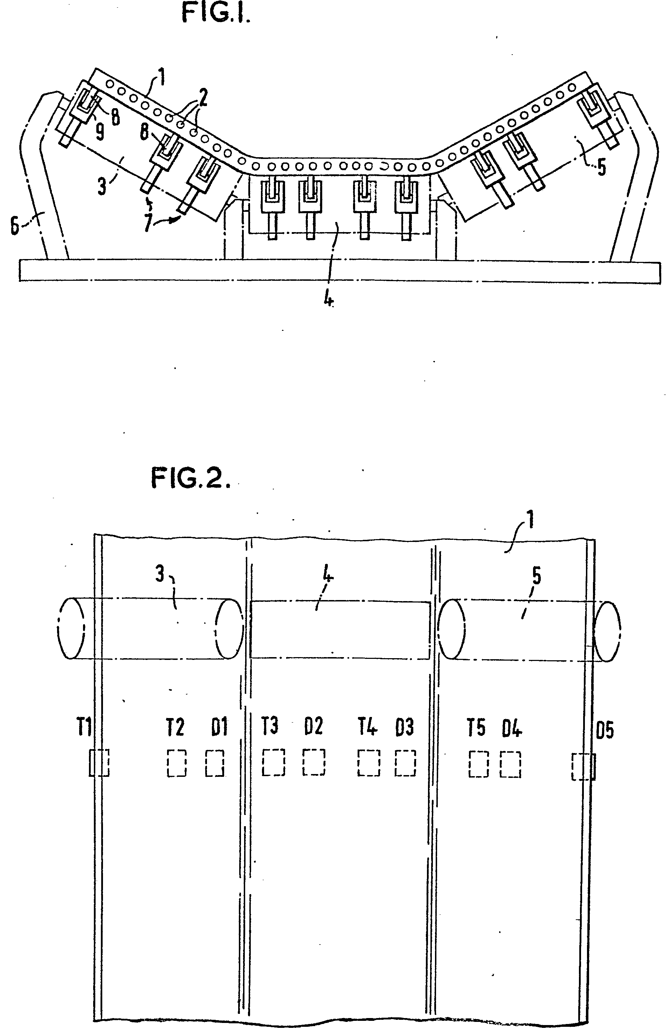

The present embodiment of the invention is intended for the continuous testing for faults in a conveyor belt while it is in use. The conveyor belt 1 (Figures 1 and 2) is made of any suitable organic polymer and is reinforced by steel cords 2 that extend longitudinally of the belt. The belt is supported by sets of rollers, of which one set is shown in Figures 1 and 2. The rollers 3, 4, and 5 in this set are supported by a frame 6 and respectively support the left-hand margin, the central part and the right-hand margin of the belt, the two side margins being upwardly inclined relative to the central part. The belt 1 moves, or is driven, lengthwise.

At locations spaced apart across the width of the conveyor are transducers 7, each of which is constituted by a roller 8 supported by a holder. The axis of each roller is, in this embodiment, disposed parallel to the adjacent part of the belt and aligned in a direction transverse the belt. There is a plurality of pairs of transducers, each pair comprising a transmitter and a receiver spaced apart across a respective region of the belt; these regions overlapping in the direction across the belt. In the arrangement shown in Figure 2, wherein the transmitting transducers are referenced T1, to T2 etc., and the receiving transducers are referenced D1, D2 etc., a first transmitter is disposed close to the left-hand edge of the belt, the other transducers being aligned with this transducer in the direction transverse the belt, the transmitter T2 of the second pair being between the transmitter and receiver of the first pair and so on so that every part of the conveyor belt can be subjected to an ultrasonic mechanical wave passing between at least one pair of transducers. In the illustrated embodiment, the transducers in each pair are aligned transversely of the conveyor; however such strict alignment is not essential. Moreover, the various pairs of transducers could be displaced longitudinally of the conveyor.

Each of the transmitting transducers T1, T2 etc., is disposed for energisation from an electrical pulse generator so as to produce ultrasonic mechanical wave signals occupying a spectrum of frequencies having resonant peaks which depend on the physical characteristics of the transducer but are preferably in the range from 80 to 250 kHz. If there is a significant flaw in that part of the conveyor belt which at the time is between the locations of a given transmitting and receiving transducer, the output electrical signal produced by the receiving transducer will be much attenuated relative to the signal which is produced by that receiver in the absence of any flaw. There will also be, in general, a time displacement of signals produced by the detector relative to the signal which would be produced in the absence of a flaw. A variety of discriminators might be used to detect the effects of a flaw on the transmission of the ultrasonic mechanical waves through the conveyor belt between the transducers of a pair, but in the present embodiment a simple arrangement which discriminates between a small and a large amplitude of received signal to detect a flaw is used.

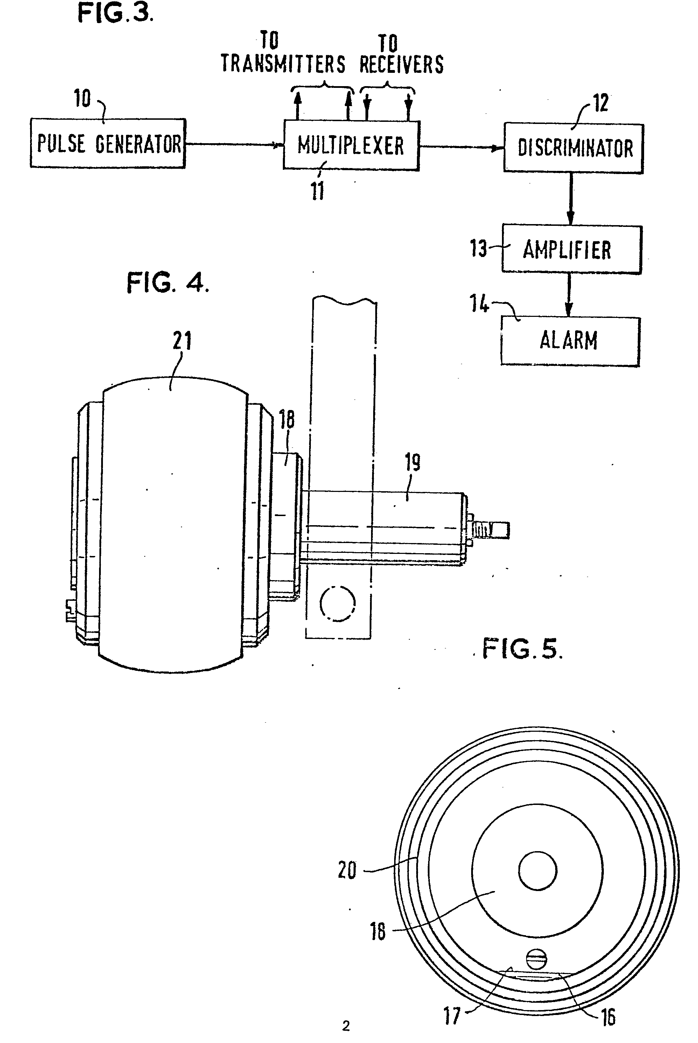

Figure 3 illustrates schematically the electrical circuit for applying signals to and receiving signals from the transducers. A pulse generator 10 feeds a time division multiplexer 11 which feeds the transmitting transducers T1 to T5 in cyclic sequence and synchronously couples the respective receiver electrically to a discriminator 12, which is calibrated to distinguish between signal amplitudes at a particular frequency in the range 80 to 250 kHz denoting a fault and no fault respectively. It would usually be necessary to provide a time delay so that comparatively short absences of received signal do not produce an output signal, for example while the multiplexer 11 is switching channels. An output denoting the absence of a sufficient signal amplitude for at least a predetermined time by the discriminator is fed by the discriminator to an amplifier 13 which drives an alarm 14.

Figures 4 and 5 illustrate one of the transducers which are each in the form of a roller.

Each transducer consists essentially of a piezoelectric disc which transduces electrical signals to ultrasonic signals or vice versa, a rotary support on which the disc is mounted and a coupling member which is required to transmit the ultrasonic mechanical wave signals to and from the conveyor with a minimum of mismatch between the various elements of the transducer. The outer part of the roller ought to be, as proposed in the aforementioned prior patent application, of a material which is soft enough to give good acoustic coupling to the material of the conveyor. If there were but one intermediate member (such as the hub on which the piezoelectric element is mounted, between the piezoelectric element and the outer part of the roller, the acoustic impedance of the intermediate member should be the square root of the product of the acoustic impedances of the piezoelectric element and the material of the outer member. In practice there would usually be two intermediate members such as the hub and a rim; the optimum acoustic impedances can readily be determined, on the assumption that those of the disc and the outermost element are predetermined, by supposing that each element should have an acoustic impedance equal to the square root of the product of the impedances of the elements in each side of it. In the embodiment shown, the piezoelectric element is a lead zirconite titanate crystal 16 fixed into a slot 17 in an aluminium hub 18 that is mounted on a spring loaded piston 19. A cable lying in a slot (not shown) connects the disc electrically with the external electrical circuit. The hub carries a rim of polymethyl methacrylate which is acoustically coupled to the hub by means of a vacuum sealed oil chamber 19 which allows the rim to rotate on the hub. On the rim 20 is mounted a soft plastic tyre 21 made of a suitable synthetic plastic such as polyvinylchloride. The acoustic impedance of the lead zirconate disc is $2.88 \times 10^7$ units (kg per square meter per second), and that of the plastic tyre is about $0.23 \times 10^7$ such units. The hub should be of a material of acoustic impedance $1.0 \times 10^7$ such units and the rim should have an acoustic impedance of $0.48 \times 10^7$ units. In the present embodiment the hub is made of aluminium, of which the acoustic impedance is $1.5 \times 10^7$ kg per square meter per second; the "perspex" used for the rim has an acoustic impedance of $0.3 \times 10^7$ kg per square meter per second. The outside diameter of the roller may be between 0.025 and 0.250 m.

**Claims**

1. A detector which is disposed to detect a longitudinal fault in a conveyor belt (1) while the belt is in motion by means of the effect of the fault on the transmission of an ultrasonic mechanical wave across the belt, the detector comprising at least one pair of transducers (8) which make rolling contact with the same side of the belt and constitute a transmitter (T1) and receiver (D1) respectively of the said wave.

2. A detector according to claim 1 in which a plurality of pairs (T1, D1 and T2, D2) of transducers are each disposed as aforesaid to transmit a signal across a respective one of a plurality of regions that overlap in the direction transverse the belt, the detector including a division multiplexer (11) which operates to connect a signal generator (10) and a discriminator (12) to the transducers of one pair at a time in a cyclic sequence.

3. A detector according to claim 1 or claim 2 in which the discriminator (12) discriminates between different received signal amplitudes to detect a fault.

4. A detector according to claim 3 in which the discriminator (12) is tuned to a frequency in the range 80 kHz to 250 kHz.

5. A detector according to any foregoing claim, in which each transducer comprises a roller that incorporates a piezoelectric member (16).

6. A detector according to claim 5 in which the roller has an outside diameter between 25 mm and 250 mm.

7. A method of detecting a longitudinal fault in a conveyor belt while the belt is in motion, the method comprising:

applying an ultrasonic mechanical wave signal to the belt by means of a transmitter which makes rolling contact with the underside of the belt;

receiving an ultrasonic mechanical wave signal by means of a receiver which makes rolling contact with the underside of the belt at a location which is spaced apart transversely of the belt from the location of the transmitter; and discriminating between different amplitudes of the signal received by the receiver.

**Revendications**

1. Détecteur disposé de manière à détecter un défaut longitudinal dans une bande transporteuse (1) tandis que la bande se déplace, grâce à l'effet du défaut sur la transmission d'une onde mécanique ultrasonique à travers la bande, le détecteur comprenant au moins une paire de transducteurs (8) qui sont en contact roulant avec le même côté de la bande et constituent respectivement un émetteur (T1) et un récepteur (D1) de ladite onde.

2. Détecteur selon la revendication 1, dans lequel une pluralité de paires (T1, D1 et T2, D2) de transducteurs sont disposées comme indiqué ci-dessus pour transmettre un signal sur une d'une pluralité de régions qui se recouvrent dans le sens transversal de la bande, le détecteur comprenant un multiplexeur à division de temps (11) qui connecte à la fois un générateur de signaux (10) et un discriminateur (12) aux transducteurs d'une paire selon une séquence cyclique.

3. Détecteur selon la revendication 1 ou 2, dans lequel le discriminateur (12) discrimine entre elles différentes amplitudes des signaux reçus pour détecter un défaut.

4. Détecteur selon la revendication 3, dans lequel le discriminateur (12) est réglé sur une fréquence comprise entre 80 kHz et 250 kHz.

5. Détecteur selon l'une quelconque des revendications précédentes, dans lequel chaque transducteur comprend un galet qui comprend un élément piézoélectrique (16).

6. Détecteur selon la revendication 5, dans lequel le galet a un diamètre extérieur compris entre 0,025 m et 0,25 m.

7. Procédé pour détecter un défaut longitudinal dans une bande transporteuse tandis que cette bande se déplace, ce procédé comprenant les opérations consistant à:

— appliquer un signal d'ondes mécaniques ultrasoniques à la bande à l'aide d'un émetteur qui est en contact roulant avec le côté inférieur de la bande,

— recevoir un signal d'ondes mécaniques ultrasoniques à l'aide d'un récepteur en contact roulant avec le côté inférieur de la bande en un emplacement espacé d'une certaine distance dans le sens transversal de la bande par rapport à l'emplacement de l'émetteur; et discriminer entre elles différentes amplitudes des signaux reçus par le récepteur.

**Patentansprüche**

1. Detektor zur Feststellung eines Längsdefekts in einem Förderband (1) während der Bewegung desselben mit Hilfe der Wirkung des Defekts auf die Transmission einer mechanischen Ultraschallwelle quer über das Band, wobei der Detektor mindestens ein Paar von Umwandlern (8) aufweist, die in rollendem Kontakt mit der gleichen Seite des Bandes sind und jeweils einen Sender (T1) und einen Empfänger (D1) der genannten Welle darstellen.

2. Detektor nach Anspruch 1, bei welchem eine Vielzahl von Paaren (T1, D1 und T2, D2) von Umwandlern jeweils wie erwähnt angeordnet sind, um ein Signal quer über jeweils einen der Vielzahl von Bereichen zu senden, die sich in Querrichtung des Bandes überlappen, und der einen Teilungsmultiplexer (11) aufweist, der die Verbindung eines Signalgenerators (10) und eines Diskriminators (12) mit den Umwandlern eines Paares gleichzeitig in zyklischer Folge bewirkt.

3. Detektor nach Anspruch 1 oder 2, bei welchem der Diskriminator (12) zwischen verschiedenen empfangenen Signalamplituden zur Feststellung eines Defekts unterscheidet.

4. Detektor nach Anspruch 3, bei welchem der Diskriminator (12) auf eine Frequenz im Bereich von 80 bis 250 kHz eingestellt ist.

5. Detektor nach einem der vorhergehenden Ansprüche, bei welchem jeder Umwandler eine Walze aufweist, die ein piezoelektrisches Glied (16) eingebaut enthält.

6. Detektor nach Anspruch 5, bei welchem die Walze einen äußeren Durchmesser von 25 bis 250 mm aufweist.

7. Verfahren zur Feststellung eines Längsdefekts in einem Förderband während der Bewegung desselben, wobei ein mechanisches Ultraschallsignal auf das Band mit Hilfe eines Senders aufgebracht wird, der sich in rollendem Kontakt mit der Unterseite des Bandes befindet, ein mechanisches Ultraschallsignal mit Hilfe eines Empfängers empfangen wird, der in rollendem Kontakt mit der Unterseite des Bandes in einer Stellung ist, die sich von der Stellung des Senders im Abstand quer zum Band befindet; und zwischen verschiedenen Amplituden des durch den Empfänger empfangenen Signals unterschieden wird.

# FIG.I.

# FIG.2.

## 0 005 932

## FIG.3.

TO TRANSMITTERS  TO RECEIVERS

| 10 PULSE GENERATOR | → | 11 MULTIPLEXER | → | 12 DISCRIMINATOR |

13 AMPLIFIER

14 ALARM

## FIG. 4.

21

18

19

## FIG.5.

20

18

17    16

2